Europäisches Patentamt

European Patent Office

Office européen des brevets

(19)

(11) **EP 0 931 924 B1**

(12) **EUROPEAN PATENT SPECIFICATION**

(45) Date of publication and mention
of the grant of the patent:
**06.08.2003 Bulletin 2003/32**

(51) Int Cl.7: **F02D 41/14**, F01N 3/20,
F02P 5/15

(21) Application number: **99100961.4**

(22) Date of filing: **20.01.1999**

(54) **Method of control of the injection and ignition of the air/fuel mixture in an internal combustion engine**

Verfahren zur steuerung der Kraftstoffeinspritzung und der Zündung des Luft-Kraftstoffverhältnisses einer Brennkraftmaschine

Méthode de commande de l'injection et de l'allumage du mélange air-carburant d'un moteur à combustion interne

(84) Designated Contracting States:
**DE ES FR GB IT SE**

(30) Priority: **21.01.1998 IT BO980018**

(43) Date of publication of application:
**28.07.1999 Bulletin 1999/30**

(73) Proprietor: **MAGNETI MARELLI POWERTRAIN S.p.A.**
**10138 Torino (IT)**

(72) Inventors:
• **Poggio, Luca**
**15047 Spinetta Marengo (IT)**

• **Secco, Marco**
**14049 Nizza Monferrato (IT)**

(74) Representative: **Eccetto, Mauro et al**
**Studio Torta S.r.l.,**
**Via Viotti, 9**
**10121 Torino (IT)**

(56) References cited:
**EP-A- 0 499 207          FR-A- 2 721 653**
**US-A- 5 655 365          US-A- 5 661 971**

## Description

The present invention relates to the method for controlling the injection and ignition of the mixture in an internal combustion engine.

The present invention has an advantageous application in the automotive field, to which the considerations which follow make specific reference though without loss of its general features.

In the automotive field, the use of catalytic converters placed along the exhaust gas discharge is known, these being used to reduce the polluting substances present in such gases. As it is known, the correct operation of the catalytic converter is subject to the fact that the converter achieves a predefined operating temperature, whilst the maximum converter efficiency, that is to say the capacity to reduce the polluting the substances in an optimum manner, is allied with the fact that the ratio of air and fuel of the mixture supplied to the engine is maintained close to the stoichiometric value, or within a predetermined range which includes the stoichiometric value.

In order to accelerate the heating of the catalytic converter following an engine cold start-up, or to rapidly raise the converter temperature to its operational level, the use of a control method is known for the injection and the ignition of the mixture, whereby on every cycle of the engine each cylinder is provided with a non-stoichiometric mixture, in particular a rich mixture characterised by an air/fuel ratio value lower than the stoichiometric ratio, and for each cylinder the explosion moment of the combustion is so delayed in relation to the nominal explosion moment in such a manner that combustion as such occurs when the exhaust valves are partly open. In accordance with that method, combustion does not occur entirely within the combustion chamber and a percentage of fuel is burned inside the discharge duct giving rise to a residual combustion which provides heat to the catalytic converter thus accelerating the heating process for the catalytic converter itself.

The known control method described above, while favouring the catalytic converter in reaching its temperature, initially involves large fuel consumptions and in the second instance considerable emissions of polluting substances from the exhaust duct, that is to say into atmosphere, since the ratio of air/fuel of the mixture supplied to the engine differs considerably compared with the stoichiometric value.

EP0499207 discloses a control apparatus for speedily warming up a catalyst disposed within an exhaust pipe connected to an internal combustion engine. The control apparatus first determines a fuel injection amount and an ignition timing of the engine on the basis of an engine operating condition such as an intake air pressure of the engine and a rotational speed of the engine. The control apparatus is also responsive to temperature information of the catalyst for adjusting the fuel injection amount and the ignition timing in accordance with the catalyst temperature information. When the catalyst temperature does not reach the effectively emission-purifying temperature, the control apparatus alternately adjusts the fuel injection amount to a rich side and a lean side and further intermittently retards the ignition timing. This injection and ignition control operation allows acceleration of the warming-up of the catalyst to suppress the deterioration of the emissions from the engine.

US5655365 discloses a method of operating an internal combustion engine comprising retarding the ignition of a gas/fuel mixture within at least one cylinder of the engine to after top dead center (ATDC) in respect of the combustion cycle of said at least one cylinder of the engine. While the ignition is so retarded, the fuelling rate of said at least one cylinder is increased to a level higher than that required when the engine is operating normally.

The purpose of the present invention is to provide a controlling means for the injection and ignition of the mixture in an internal combustion engine, which is free from the disadvantages described above, that is to say allowing the acceleration of the heating of the catalytic converter while minimizing the emission of polluting substances present in the exhaust gas.

According to the present invention, there is provided a method method for controlling the injection and ignition of the mixture in an internal combustion engine as recited by Claim 1.

The invention is now described with reference to the appended drawings, which illustrate a non-restrictive operating example, wherein:

- Figure 1 is a diagram illustrating an arrangement for controlling injection and ignition of the mixture in an internal combustion engine implementing the method according to the present invention;
- Figure 2 shows a block diagram defining the applicability conditions of the method;
- Figure 3 shows a block diagram of the operations implemented according to the method following the present invention; and
- Figures 4 and 5 represent an application of the method in conjunction with a four-cylinder engine.

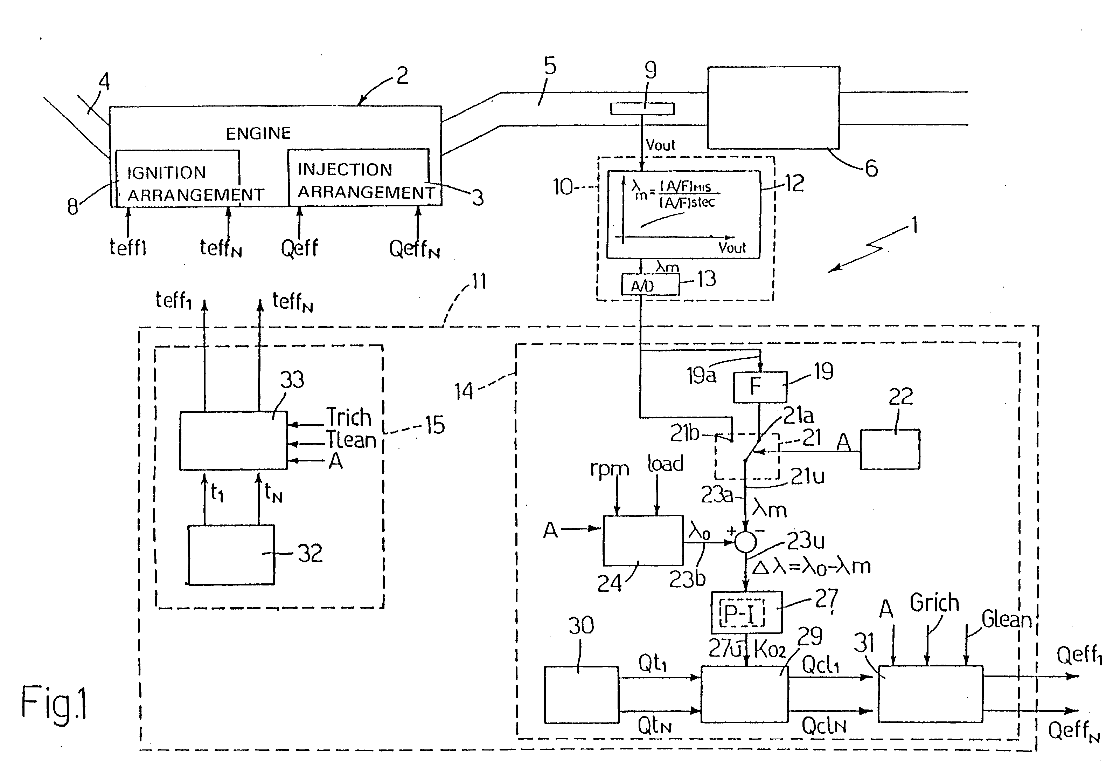

With reference to Figure 1, reference 1 indicates an overall electronic regulating arrangement for an internal combustion engine 2 (illustrated as a diagram), in particular a petrol engine.

The engine 2 comprises a given number N of cylinders (not illustrated) each defining in accordance with its specific upper end, a combustion chamber within which a flow of petrol may be injected by means of an injection arrangement 3 (illustrated as a diagram).

In addition, the engine 2 has an intake manifold 4 to provide a flow of air to the cylinders and an exhaust duct 5 along which are conveyed the combustion exhaust gases expelled from the combustion chambers.

Along the duct 5 is located a catalytic converter 6 (of known type), designed to reduce the polluting substances present in the exhaust gases.

The engine 2 comprises an ignition arrangement 8 (of known type) designed to control the ignition of the plugs (not illustrated) of the various cylinders to control the explosion moment of combustion of the mixture within each of the combustion chambers.

The control arrangement 1 is designed to control the injection arrangement 3 to regulate petrol injection into the cylinders and the arrangement 8 to determine the explosion moments of the combustion phases, and as may be seen more clearly hereinafter, also designed to implement a control strategy for the arrangements 3 and 8 designed to accelerate the heating of the catalytic converter 6 following a so-called "cold-start" of the engine 2.

The control arrangement 1 comprises an oxygen sensor 9 located along the exhaust duct 5 upstream from the catalytic converter 6 and designed to generate at the exit a "Vout" signal related with the stoichiometric composition of the exhaust gases and in consequence, with the air/petrol (A/F) ratio of the whole mixture supplied to the engine 2.

The arrangement 1 also comprises a conversion circuit 10, which is connected as an input at the output of the sensor 9, and is designed to convert the Vout signal into a λm parameter representative of the air/petrol A/F ratio of the complete mixture supplied to the engine 2 and defined as

$$\lambda m = \frac{(A/F)meas}{(A/F)stoich}$$

where (A/F)meas represents the value of the air/petrol ratio measured by the sensor 9 and correlated with the Vout signal and (A/F)stoich represents the value of the stoichiometric air/petrol ratio equal to 14.57. In particular if the value of parameter λm exceeds unity (λm > 1) the air/petrol A/F ratio as measured is greater than the stoichiometric air/petrol ratio, that is to say as a whole, an insufficient quantity of petrol is present and the mixture supplied to the engine 2 is defined as lean, whereas if the value of parameter λm is lower than unity (λm < 1) the ratio of measured air/petrol A/F is lower than the stoichiometric air/petrol ratio, there is an overall presence of petrol in excess quantity and the mixture supplied to the engine 2 is termed as rich.

The arrangement 1 finally comprises an electronic engine control unit 11, which is connected to the conversion circuit 10 to receive parameter λm at the input, and is designed to control either the ignition arrangement 8 by way of the emission of signals $teff_1$,.., $teff_i$,..,$teff_N$ indicative of the effective explosion moments of combustion within the cylinders (where $teff_i$ represents the explosion moment in the given i-ordinal cylinder), the injection arrangement 3 by the emission of $Qeff_1$,..,$Qeff_i$,..,$Qeff_N$ signals being indicative of the effective quantity of petrol to be supplied to the cylinders (where $Qeff_i$ shows the quantity of petrol to be supplied to the i-ordinal cylinder).

The oxygen sensor 9 is preferably though not necessarily, of the linear type (for instance in the form of the UEGO sensor) that is to say designed to generate an output signal such as Vout (in terms of voltage or current) proportional to the concentration of oxygen present in the exhaust gas.

The conversion circuit 10 comprises two converters 12 and 13 placed in series, of which converter 12 is connected as input at the output of sensor 9 to receive the Vout signal, and able to transform the Vout signal in the λm parameter by way of its own conversion characteristic C. On the other hand, converter 13 is an analog/digital converter which receives on input the λm parameter and is connected as an output to central unit 11 to supply the digitalized value of λm parameter to the central unit 11.

The electronic central unit 11 comprises two functional calculator blocks, shown as 14 and 15, of which block 14 receives as input the λm parameter and generates as output signals $Qeff_1$,..,$Qeff_i$,..,$Qeff_N$ to control the injection arrangement 3, whilst block 15 generates on output signals $teff_1$,..,$teff_i$,..,$teff_N$ to control the ignition arrangement 8. Central unit 11 on the other hand, receives as input a plurality of information signals P measured at the engine 2 (for instance number of revolutions, pressure of intake manifold 4 and/or air capacity, temperature of engine coolant liquid, air temperature, butterfly valve position, etc.) together with information signals external to the engine (for instance time lag from start-up moment, accelerator pedal position, signals from the vehicle gearbox, etc..)

In block 14 the digitalized λm parameter is supplied to the input 19a of a filtering arrangement 19, which is designed to ensure filtering of λm parameter to eliminate high frequency signal components, and is connected as output with a first input 21a of a selector arrangement 21 to supply the filtered λm parameter to selector arrangement 21 itself. The selector arrangement 21 also has a second input 21b directly connected to the output of the analog/digital converter 13 to directly receive the digitalized λm parameter, and a common output 21u selectively and alternately connecting with the first input 21a or the second input 21b.

In particular, the first and second inputs 21a, 21b of the arrangement 21 are designed to communicate alternately with the output 21u on the basis of the value of a flip-flop enabling signal A supplied to the selector arrangement 21 from a control arrangement 22 designed to determine the enabling conditions of the control strategy defined by the present invention.

The control arrangement 22 receives as input a part of the information signals P and is designed to give a high logic value to signal A to control the connection between input 21a and output 21u providing that the method applicability conditions have been checked, that is to say when the catalytic converter 6 is able to rapidly reach the specified operating temperature following a cold start of the engine 2. The arrangement 22, in addition, is designed to impart to A signal a low logic value to control the connection between input 21b and output 21u in the event that the method applicability conditions have not been confirmed, or in general should the catalytic converter 6 have already reached its operating temperature.

The output 21u of the selector arrangement 21 is connected to the subtracter input 23a of a summation node 23, also having a summation input 23b, to which is supplied a λo parameter representative of an objective air/petrol ratio defined as:

$$\lambda o = \frac{(A/F)object}{(A/F)stoich}$$

wherein (A/F)object represents the value of the objective air/petrol ratio value which is to be reached and (A/F)stoich represents the stoichiometric air/petrol ratio value equal to 14.57.

Parameter λo is generated on output (in a known manner) from an electronic board 24 to which are provided on input at least part of the said information signals P (for instance the engine rotation speed (rpm), the load applied to the engine 2, etc.).

Board 24 also has supplied to it the enabling signal A to allow generation of a specific objective parameter λo which allows calibration during the converter heating procedure 6.

Node 23 consequently generates as an output an error parameter Δλ provided by the difference between the objective parameter λo and the λm parameter obtained from the selector arrangement 21, or Δλ = λo - λm.

The node 23 has an output 23u connected to an input of processing circuit 27, for example a circuit designed to effect a multiplication and integration transformation of the input supplied signal. Circuit 27 has an output 27u on which a correct parameter K02 is present. In the example of implementation illustrated here the K02 parameter is given by the proportional integrated processing of error parameter Δλ; it is thus clear that the closed circuit K02 correction parameter may be calculated by means of various operations developed from the Δλ error parameter and using more complex calculation algorithms compared with those shown here.

The closed circuit correction parameter K02 is supplied as an input to a correction circuit 29, which is also provided with a plurality of parameters $Qt_1,..,Qt_i,..,Qt_N$ as inputs representative of the amount of petrol to be provided by injection arrangement 3 to the relevant cylinders in order to obtain optimum operation of the engine 2. The $Qt_1,..,Qt_i,..,Qt_N$ parameters are calculated (in a known manner) in open circuit by way of an electronic circuit 30 (comprising for instance one or several electronic boards) receiving as input at least part of the said information signals P.

The correction circuit 29 is designed to correlate in a known manner parameters $Qt_1,..,Qt_i,..,Qt_N$ (calculated in open circuit) with a correction parameter K02 (calculated in closed circuit) for the purpose of calculating a plurality of parameters $Qcl_1,..,Qcl_i,..,Qcl_N$ representative of the amount of petrol to be provided to relevant cylinders calculated in closed circuit.

According to a non-restrictive implementation example each said i-ordinal parameter $Qcl_i$ is calculated by multiplication of a corresponding parameter Qti for the correction parameter K02, that is to say developing the following operation:

$$Qcl_i = Qt_i * K02$$

Parameters $Qcl_i,..,Qcl_i,..,Qcl_N$ are supplied to a further correction circuit 31, which also receives as input the enabling signal A generated by the control arrangement 22, and generates as output the parameters $Qeff_1,..,Qeff_i,..,Qeff_N$ to be transmitted to the injection arrangement 3; circuit 31 is designed to develop a correction operation (illustrated in detail below) for parameters $Qcl_i,..,Qcl_i,..,Qcl_N$ exclusively when signal A assumes a high logic value, that is to say providing that the control method applicability conditions are valid.

The correction carried out by circuit 31 is effectively designed to modify the quantity of petrol calculated in closed circuit $Qcl_i,..,Qcl_i,..,Qcl_N$ on the basis of the value of two parameters, indicated as Grich and Glean, which are gain-calibrated parameters and serve as correctors to increase or reduce the quantity of petrol $Qcl_i,..,Qcl_i,..,Qcl_N$ to be provided to the cylinders in order to accelerate the heating of the catalytic converter 6.

The block 15 comprises a calculation circuit 32 (suitably achieved by an electronic board), which receives as input at least part of the information signals P and generates as output, in reply to inputs and in a well known manner, a plurality of signals $t_1,..,t_i,..,t_N$ indicative of the nominal explosion moment of the combustion within the cylinders (where ti represents the nominal explosion moment in the i-ordinal cylinder). The block 15 also comprises a correction circuit 33, which receives as input either signals $t_1,..,t_i,..,t_N$ coming from calculation circuit 32, or signal A generated by control arrangement 22, and generates $teff_1,..,teff_i,..,teff_N$ as output signals to be transmitted to the ignition arrangement 8; circuit 33 is designed to ensure correction of signals $t_1,..,t_i,..,t_N$ exclusively when signal A shows a high logic value, i.e. after verification of the applicability conditions of the aforesaid control method.

The correction effected by circuit 33 is in fact designed to modify the nominal explosion moments $t_1,..,t_i,..,t_N$ on the basis of the value of two timing parameters, indicated as Tlean and Trich, these being parameters allowing calibration and serving as correctors to accelerate or delay the effective explosion moment $teff_1,..,$

teff$_i$,..,teff$_N$ as related to their effective nominal moments.

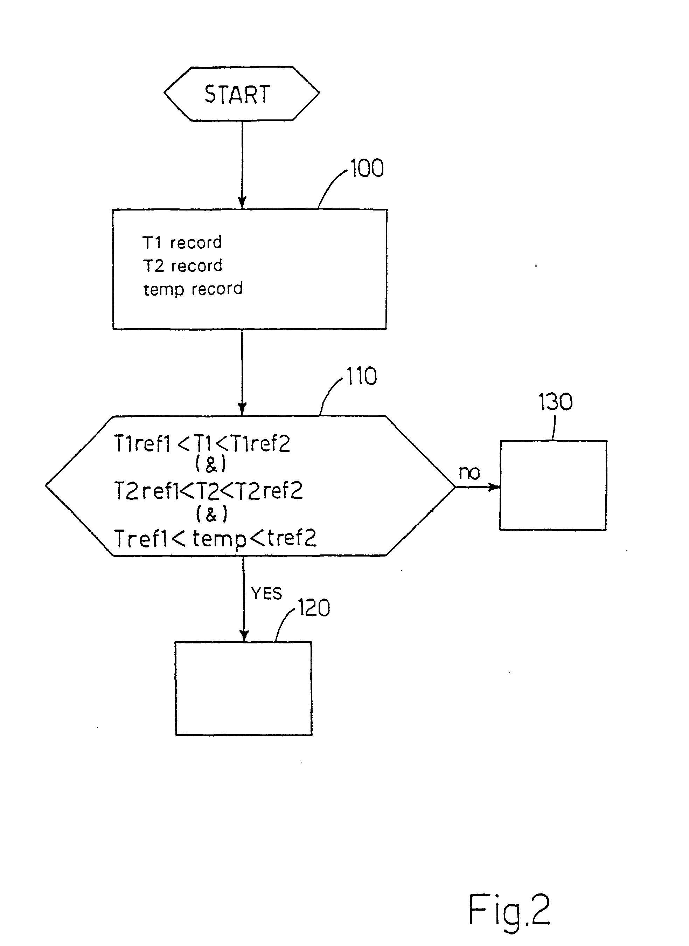

Figure 2 shows a preliminary phase of the method according to the present invention designed to verify the existence of the applicability conditions of the relevant method.

With particular reference to Figure 2, commencing from a (START) block, a block 100 is reached next, which develops a series of operations in order to control the actual values of a plurality of information signals P. In particular block 100 records:

• the temperature T1 of the air drawn into the intake manifold 4;
• the temperature T2 of the engine coolant liquid 2; and
• the time "temp" recorded from the start-up of the engine 2.

Block 100 is followed by block 110 which compares the parameters recorded in block 100 with reference values for the purpose of activating or inhibiting the above method. In particular, block 110 develops the following control operations:

$$T1ref1 < T1 < T1ref2 \qquad (1)$$

$$T2ref1 < T2 < T2ref2 \qquad (2)$$

$$tref1 < temp < tref2 \qquad (3)$$

wherein T1ref1, T1ref2, T2ref1, T2ref2, tref1, tref2 represent reference values stored in the control arrangement 22.

Block 110 is followed by a block 120 wherein all inequalities (1), (2) and (3) are checked, otherwise (saving an unsatisfied inequality) block 110 is followed by block 130. Simultaneous satisfaction of all of the above inequalities (1), (2) and (3) implies that the engine 2 is in a state of operation immediately following a "cold start" and in consequence implies that the catalytic converter 6 has not yet reached the stated operating temperature.

Block 120 (detailed below) operates a check on injection and ignition designed to achieve rapid heating of the catalytic converter 6 while maintaining the air/petrol A/F stoichiometric ratio of the mixture supplied to the engine 2 during such heating operations. Following the selection of block 120, the enabling signal A is obliged to assume the relevant high logic value and in consequence, the output 21u of the selector arrangement 21 is connected to the input 21a supplying to the summation node 23, the λm filtered parameter; in this manner during the control operations intended to achieve a rapid heating of the catalytic converter 6 a filtered λm parameter is used.

Block 130 operates a check of known type on the injection and ignition maintaining the stoichiometric nature of the air/petrol ratio as supplied to the engine 2 during the operation of the engine 2 in a manner whereby the catalytic converter 6 has reached the operating temperature.

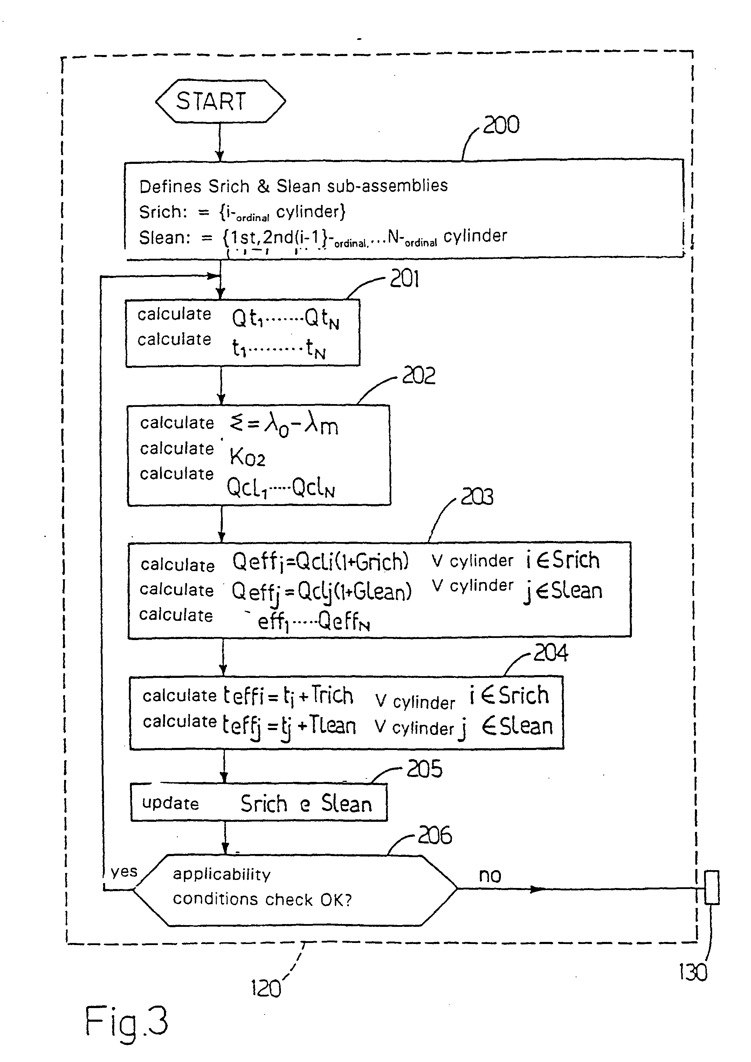

Block 120 implementing the control method object of the present invention is now detailed with reference to Figure 3.

From an initial block (START) an initialisation block 200 is reached whereby the cylinders are subdivided into two Srich and Slean sub-assemblies: the Srich sub-assembly comprises the cylinders which must be supplied with a rich mixture, that is to say characterised by an air/petrol A/F ratio lower than stoichiometric ratio, whereas the Slean sub-assembly comprises the cylinders which must be supplied with a lean mixture, that is to say an air/petrol A/F ratio higher than the stoichiometric ratio. In the illustrated operational form the Srich sub-assembly comprises a single cylinder, for instance the i-ordinal, whereas the Slean sub-assembly comprises the remaining N-1 cylinders.

Block 200 is followed by block 201 which by means of circuit 30 calculates the quantities of petrol Qt$_1$,..,Qt$_i$,..,Qt$_N$ which should be supplied to individual cylinders. Also in block 201, using circuit 32, the signals t$_1$,..,t$_i$,..,t$_N$ indicative of the nominal moments of explosion of the cylinder combustions are calculated.

Block 201 is followed by block 202 in which on the basis of the value of λo parameter in output from board 24 (and approximately equal to the value of the stoichiometric ratios), and on the basis of the value of parameter λm in output from the filter arrangement 19, the Δλ = λo - λm error parameter is first calculated by means of the summation node 23, and the correction K02 parameter is then calculated by means of circuit 27. Parameter K02 is subsequently applied to the quantities Qt$_1$,..,Qt$_i$,..,Qt$_N$ by means of correction circuit 29 to arrive in closed circuit at the quantities Qcl$_1$,..,Qcl$_i$,..,Qcl$_N$ be injected into the individual cylinders.

Block 202 is followed by a block 203 in which is corrected the quantity of petrol Qcl$_1$,..,Qcl$_i$,..,Qcl$_N$ with the aid of correction circuit 31 to obtain the quantities of petrol Qeff$_1$,..,Qeff$_i$,..,Qeff$_N$ to be effectively supplied to the individual cylinders. In particular, the correction made by circuit 31 is designed to ensure that in the cylinder forming the Srich sub-assembly a richer mixture is provided, whereas in the cylinders forming the Slean sub-assembly respective lean mixtures are provided; in effect, the quantity of petrol Qeff$_1$ to be provided to the cylinder forming the Srich sub-assembly, is obtained by applying the Grich gain parameter (greater than zero) to the corresponding quantity of petrol Qcl$_i$ according to the expression:

$$Qeff_i = Qcl_i * (1+ Grich) \qquad (4)$$

whereas the quantity of petrol $Qeff_j$ (where $j \in \{1,..,N\}$, $j \neq i$) to be supplied to each cylinder forming the Slean sub-assembly is obtained by applying the Glean gain parameter (less than zero) to the corresponding quantity of petrol $Qcl_j$ according to the expression:

$$Qeff_j = Qcl_j * (1+ Glean) \qquad (5)$$

In this way a rich mixture is provided to the cylinder forming the Srich sub-assembly, whereas a lean mixture is provided to the cylinders forming the Slean sub-assembly. The Grich and Glean parameters are calibrated in such a manner that the mixture as a whole provided to the engine 2 is essentially stoichiometric.

Block 203 is followed by a block 204 in which the correction of the nominal explosion moments $t_1,..,t_i,..,t_N$ of combustion in the cylinders by means of correction circuit 33 is effected so as to obtain the effective explosion moments $teff_1,..,teff_i,..,teff_N$. The correction operated by circuit 33 is designed so that in the cylinder forming the Srich sub-assembly the effective ignition moment teffi of the combustion is delayed in relation to the relative nominal explosion moment $t_1$, whereas in each cylinder forming the Slean sub-assembly the $teff_j$ moment of effective explosion of combustion is anticipated in relation to the relevant nominal moment $t_j$; in effect the moment of effective ignition $teff_1$ in the cylinder forming the Srich is obtained by the application of timing parameter Trich (greater than zero) to the relevant nominal moment $t_1$ according to the expression:

$$teff_i = t_i + Trich \qquad (6)$$

whereas the effective ignition moment teffj (where $j \in \{1,..,N\}$, $j \neq i$) in each cylinder forming Slean is obtained by applying the time parameter Tlean (less than zero) to the corresponding nominal moment $t_j$ according to the expression:

$$teff_j = t_j + Tlean \qquad (7)$$

In this way the combustion in the cylinder forming the Srich sub-assembly is delayed in relation to the nominal ignition moment, whereas combustion in the cylinders forming the Slean sub-assembly is anticipated in relation to the relevant nominal moments.

The Trich parameter is so calibrated that the combustion in the cylinder forming the Srich sub-assembly occurs when the exhaust valves (not illustrated) associated with the cylinder are partly open: in this way not all the combustion occurs internally to the relevant combustion chamber and a percentage of the quantity of fuel Qeffi supplied to the cylinder is burned inside the exhaust duct 5 giving rise to a residual combustion which provides heat to the catalytic converter 6 thus accelerating the heating process for the converter 6.

The Tlean parameter on the other hand is so calibrated that the combustion in the cylinders forming the Slean sub-assembly occurs entirely inside the relevant combustion chambers and provides, along the exhaust duct 5, oxygen-rich combustion gases able to favour the aforesaid residual combustion: in that way the cylinders forming the Slean sub-assembly behave similarly to an oxygen pump placed along exhaust duct 5.

The operations completed within the blocks from 201 to 204 allow a control on the effective quantities of petrol $Qeff_1,..,Qeff_i,..,Qeff_N$ to be supplied to the cylinders in relation to a cycle of the engine 2 and at the same time, allow a control on the moments $teff_1,..,teff_i,..,teff_N$ of effective explosion of combustion in relation to the said cycle. Such operations are repeated for each cycle of the engine 2 so that the method applicability conditions are verified, that is to say until the enabling signal A assumes a high logic value and consequently, the catalytic converter 6 has not reached the specified operating temperature.

According to the method of the present invention, provision is made in every cycle for an updating of the composition of the Srich and Slean sub-assemblies to define the cylinders which in the successive cycle of the engine 2, need to be supplied with a rich mixture and respectively a lean mixture. The updating is effected to avoid that the same cylinder is always supplied with a rich mixture throughout the cycles of the engine 2, and is designed to ensure that all the cylinders are managed in the same manner over a given number of cycles to ensure a certain stability of torque obtained from the engine 2 during the rapid heating of the catalytic converter 6. For that purpose, the following block 204 the updating of the Slean and Srich sub-assembly compositions is achieved by block 205 according to a predefined cylinder rotation procedure. In particular, the said predefined rotation procedure ensures that in a number of cycles of engine 2 equal to a predetermined N number of cylinders, each cylinder is supplied with a rich mixture exclusively in one cycle (that is to say each cylinder forms part of the Srich sub-assembly exclusively during one cycle) and is supplied with the lean mixture during the remaining cycles (or that cylinder is part of the Slean sub-assembly in the remaining cycles).

According to the present form of actuation block 205 ensures updating of the Srich and Slean sub-assemblies in the following manner:

- Whereas in the effective cycle of engine 2 the Srich sub-assembly contains one of the first N-1 cylinders, for instance the i-ordinal, in the following cycle the Srich sub-assembly will only contain the cylinder following that particular cylinder, that is to say the (i+1)-ordinal cylinder, while the Slean sub-assembly will include the remaining cylinder, that is to say all of the cylinders saving the (i+1)-ordinal;

- Whereas on the other hand in the effective cycle of the engine 2 the Srich sub-assembly includes the N-ordinal cylinder, in the following cycle the Srich sub-assembly will only include the first cylinder, whereas the Slean sub-assembly will include the remaining cylinders, that is to say all cylinders saving the first. In other words, updating effected by block 205 ensures a "rotational shift forward" of the cylinder to be supplied with the rich mixture, whereas the Slean sub-assembly is always complementary to the Srich sub-assembly. The output of block 205 is followed by a block 206 in which the method applicability conditions are tested once more, a test being made to see if the catalytic converter 6 has achieved its operational temperature or not. This is effected by recording as in block 100, the values of signals T1, T2 and Temp and successively testing as in block 110 that the inequalities (1), (2) and (3) are satisfied.

Having satisfied the inequalities (1), (2) and (3) (i.e. the enabling signal A assumes once more a high logic level) there is a return to block 201 with the Srich and Slean sub-assemblies duly updated and the operations described above are repeated, otherwise (saving an unsatisfied inequality) block 130 becomes operative and the said injection and ignition test of known type is made since the catalytic converter 6 has henceforth achieved its operating temperature.

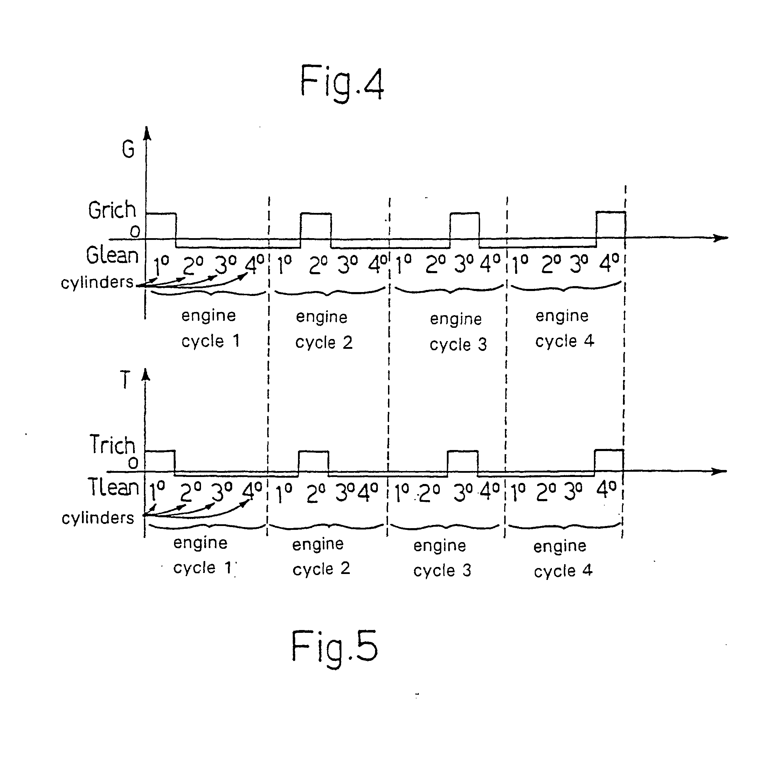

In Figures 4 and 5 the application of the above test method is illustrated with reference to a four-cylinder engine 2. As previously described the result is that on each cycle of the engine 2 the effective quantity $Qeff_k$ of petrol to be injected in the k-ordinal cylinder is calculated according to the following expression:

$$Qeff_k = Qcl_k * (1+ G)$$

where G is a gain parameter equal to Glean (where Glean < 0) whenever the k-ordinal cylinder is part of the Slean sub-assembly, or is equal to Grich (where Grich > 0) whenever the k-ordinal cylinder is part of the Srich sub-assembly.

In a similar manner, it results from the above description that the effective explosion moment $teff_k$ of combustion in the k-ordinal cylinder is calculated according to the expression

$$teff_k = t_k + T$$

where T is a time parameter equal to Tlean (where Tlean < 0) whereas the k-ordinal cylinder forms part of the Slean sub-assembly, or is equal to Trich (where Trich > 0) whenever the k-ordinal cylinder forms part of the Srich sub-assembly.

Figure 4 illustrates the values assumed for parameter G, cylinder after cylinder, according to the sequence of cycles of the engine 2, whereas Figure 5 illustrates the values assumed for parameter T, cylinder after cylinder, in accordance with the sequence of actual cycles. From Figures 4 and 5 it is clear that in any cycle a single cylinder is part of the Srich sub-assembly, and in consequence, the relative G parameter assumes the Grich value and parameter T assumes the Trich value, whereas the other three cylinders are part of the Slean sub-assembly and in consequence the relative parameters G assume Glean values and the relative parameters T assume the Tlean values. It will thus be noted that the cylinder supplied with a rich mixture is rotated cycle after cycle according to the previously described predetermined rotation procedure.

Throughout the whole of the rapid heating process of the catalytic converter 6 the selector arrangement 21 connects the input 21a with the output 21b supplying the filtered λm parameter to the subtracter input 23a of the summation node 23. Filtering of λm parameter at the output of the analog/digital converter 13 is effected mainly as a result of the fact that the oxygen sensor 9, being generally located in the proximity of the outputs of the cylinders and being particularly sensitive, tends to give notice of sudden variations in the air/petrol ratio of the mixture provided to individual cylinders; such variations are in fact of a not inconsiderable nature since a single cylinder during two successive cycles of engine 2 may be provided first with a rich mixture and subsequently with a lean mixture or vice versa. Consequently it is possible that the Vout signal in output from sensor 9 may have high frequency components which are representative not so much of a variation in the ratio of air/petrol of the mixture provided entirely to the engine 2, but of unexpected variations in the individual cylinders. Such components must therefore be excluded and for that reason the filtering arrangement 19 is provided. It will also be noted that whereas the oxygen sensor 9 is so calibrated that it does not give warning of variations in the ratio of air/petrol mixture supplied to a single cylinder, but exclusively of variations in air/petrol ratio of the mixture as a whole provided to the engine 2, the arrangement 19 may not be provided for and the output of the converter 13 would be directly connected to the input 23a of the summation node 23. In that case therefore, the control arrangement 22 would be connected in output exclusively to correction circuits 31 and 33 to provide them with the enabling signal A.

According to a non-illustrated variation of the control method described above for each cycle of the engine 2, the Srich sub-assembly contains a specific N1 number of cylinders (with N1 < N, N1 > 1), whereas the Slean sub-assembly contains a specific number N2 of cylinders (with N2 < N and N1 + N2 ≤ N): this means that for each cycle of engine 2 a number N1 of cylinders receive a rich mixture, whereas a number N2 of cylinders receive a lean mixture, in such a manner that the air/petrol ratio of the mixture entirely supplied to the engine 2 is essentially stoichiometric.

According to such variations the Slean and Srich sub-assemblies continue updating on each cycle of the engine 2 according to a predetermined rotation procedure for the cylinders; that procedure may differ from that already previously described, and is designed in such a way as to ensure that all the cylinders are managed equally over a given number of cycles of the engine 2.

It will also be clear that in order to achieve the rapid heating procedure for the converter 6 it is not necessary to delay the explosion moment of the combustion in all of the cylinders forming the Srich sub-assembly, and it suffices to delay the explosion moment in part of the said cylinders. Similarly to favour to said residual combustion it is not necessary to anticipate the explosion instant of combustion in each of the cylinders forming the Slean sub-assembly, and that it suffices to anticipate that moment of explosion exclusively in a part of the said cylinders.

Finally, it is clear that modifications may be made to the control method described above without thereby exceeding the protective scope of the present invention.

As an example, it is possible that the correction made by correction circuits 31 and 33 is inhibited for a number of cycles of the engine 2 notwithstanding the verification of the applicability conditions of the strategy designed to accelerate the heating of the catalytic converter 6. In those cycles the effective explosion moments of the combustion in cylinders may be nominal ones, whereas the effective quantity of petrol provided to the cylinders will be calculated in closed circuit.

It should be emphasized that the aforementioned strategy for heating the catalytic converter is applied above all when the engine is running under minimum conditions, wherein it is known that the cylinder nominal ignition moments $t_1,.., t_i,.., t_N$ are delayed in relation to the ignition moments $t_{Iopt}, .., t_{iopt}, .., t_{Nopt}$ which would guarantee the distribution of the maximum torque on the part of each cylinder.

The necessary conditions to speed up the heating of the catalytic converter and ensure that the effective ignition moments $teff_k$ of the cylinders supplied with rich mixture are delayed with respect to the relative nominal ignition moments $t_k$.

The delay in the effective ignition moments in the rich cylinders involves a loss of torque compared with that which would be obtained if the said moments were to coincide with the nominal ignition moments. Consequently it is necessary that the whole of the said delay be determined in such a manner as to achieve a compromise between the need to speed up as much as possible the heating process and the need to avoid any introduction of failures to compensate torque which could be felt by the driver thereby compromising the drivability of the vehicle.

Thus, should the effective ignition moment be delayed in rich cylinders and the effective ignition moments in lean cylinders were the nominal ignition moments, this would nevertheless lead to speeding up of the heating process, but the need to obtain a suitably balanced torque would impose the maintenance of rather limited overall delays, with the consequence that the catalytic converter would still tend to be heated in a rather slow manner.

If on the other hand, instead of delaying the effective ignition moments in the rich cylinders, the ignition moments in the lean cylinders are anticipated in such a manner as to allow them to approach the $t_{JOPT}$ moments which guarantee the distribution of maximum torque, it is possible to recover torque. This allows relatively consistent ignition delays in rich cylinders in such a manner as to obtain combustion ignitions when the relevant pistons are located beyond top dead centre. Proceeding in this way it is possible for the catalytic converter heating process to take place much faster thereby excluding the generation of torque variations felt by the driver.

It follows from this that the anticipation procedure for the effective ignition moments in the lean cylinders results in the procedure allowing a marked increase in speeding up the heating of the catalytic converter.

In effect, experimental checks made by the applicant have shown that the anticipation of the lean cylinder ignition allows a marked reduction in the time interval required to raise the catalytic converter temperature (to the point of halving the said interval) in the face of a much less significant reduction given that the ignition moment of the lean cylinder is maintained equal to the moment of nominal ignition.

**Claims**

1. Method of controlling the injection and ignition of the air/fuel mixture in an internal combustion engine (2) to accelerate the heating of a catalytic converter (6) located along the exhaust duct (5) of the engine (2), the engine (2) comprising a given number (N) of cylinders, an injection arrangement (3) to supply fuel to the cylinders and an ignition arrangement (8) to control the striking of the combustion of the cylinders; the method comprising the following stages:

   a) supplying to a first sub-assembly (Srich) of a given number (N) of cylinders, a rich mixture in which the air/fuel mixture assumes a low value compared with a stoichiometric air/fuel mixture; and

   b) supplying to a second sub-assembly (Slean) of a given number (N) of cylinders, a lean mixture in which the air/fuel mixture assumes a high value compared with a stoichiometric air/fuel mixture, and in such a manner that the air/fuel mixture of the overall mixture supplied to the engine (2) is essentially stoichiometric; the method being **characterised by** comprising the following stage: c) delaying the effective moment of combustion explosion (teff) as related to a nominal moment of explosion (t) in at least part of the cylinders supplied with the rich mixture in such a manner that a residual combustion occurs along the exhaust duct (5) and accelerates the heating of the said catalytic converter (6); said first and second sub-assembly (Srich) being of a cardinal nature equal to one.

2.  Method according to claim 1, and further comprising the following stage:

    d) anticipating the effective moment of combustion explosion (teff) of the mixture related to the nominal moment of explosion (t) in at least a part of the cylinders supplied with lean mixture to favour the said residual combustion.

3.  Method according to claim 1 or 2, wherein the said stage c) is a stage in which the effective moment of explosion (teff) is delayed compared with the nominal moment of explosion (t) in each of the cylinders supplied with rich mixture.

4.  Method according to claim 3, wherein the said stage (d) is a stage in which the effective moment of explosion (teff) is anticipated compared with the nominal moment of explosion (t) in each of the cylinders supplied with lean mixture.

5.  Method according to claim 4, wherein the said first and second sub-assemblies (Srich, Slean) are complementary to each other in relation to the said specific number (N) of cylinders.

6.  Method according to any claim from 1 to 4, and comprising the following stage:

    e) cyclical updating of the composition of the said first and second sub-assemblies (Srich, Slean) according to a preset rotation procedure for the cylinders.

7.  Method according to claim 6, wherein the said preset procedure requires that in a number of cycles of the engine (2) equal to the given number (N) of cylinders, each of the cylinders is supplied with a rich mixture exclusively in one cycle and is supplied with lean mixture in the remaining cycles.

8.  Method according to any claim from 1 to 7, wherein the said stage c) comprises the following sub-stages:

    c1) calculation (32) of the said nominal moment of explosion (t) of the combustion in the cylinders of the first sub-assembly (Srich) on the basis of a plurality of information signals (P) representative of an operative stage of functioning of the engine (2);
    c2) application (33) to the said nominal moment of explosion (t) of a delay (Trich) allowing calibration to obtain the said effective explosion moment (teff);
    c3) commanding the said ignition arrangement (8) to strike combustion in the cylinders of the first sub-assembly (Srich) at the said moment of effective explosion (teff).

9.  Method according to claim 2, wherein the said stage d) comprises the following sub-stages:

    d1) calculation (32) of the said nominal moment of explosion (t) of the combustion in the cylinders of the second sub-assembly (Slean) on the basis of a plurality of information signals (P) representative of an operative stage of functioning of the engine (2);
    d2) application (33) to the said nominal moment of explosion (t) of a delay (Tlean) allowing calibration to obtain the said effective explosion moment (teff); and
    d3) commanding the said ignition arrangement (8) to strike combustion in the cylinders of the second sub-assembly (Slean) precisely at the said moment of effective explosion (teff).

10. Method according to any claim from 1 to 9, wherein the said stages a) and b) comprise the following further sub-stages:

    -   recording a signal (Vout) representative of the stoichiometric composition of the exhaust gases by means of oxygen sensor means (9) located along the exhaust duct (5) upstream from the said catalytic converter (6);
    -   conversion (10) of the said signal (Vout) representative of the stoichiometric composition in a measured parameter ($\lambda$m) representative of the air/fuel ratio of the mixture supplied to the engine (2);
    -   calculation (24) of an objective parameter ($\lambda$o) representative of the required air/fuel ratio on the basis of a plurality of information signals (P) representative of an operative stage of functioning of the engine (2);
    -   comparison (23) of the measured parameter ($\lambda$m) with the objective parameter ($\lambda$o) calculat-

ing an error parameter ($\Delta\lambda$);

- calculation (30) for each cylinder, on the basis of a plurality of information signals (P), a theoretical respective quantity of fuel (Qt) likely to be supplied to the cylinder by means of the said injection arrangement (3) to the engine (2);

- process (27) the said error parameter ($\Delta\lambda$) to calculate a correction parameter (KO2) intended for application (29) to each said theoretical quantity of fuel (Qt) to obtain a respective quantity of fuel (Qcl) controlled in a closed ring;

- correct (31) by means of a first parameter allowing calibration (Grich), the controlled quantity of fuel (Qcl) relating to each cylinder of the first sub-assembly (Srich), to obtain a corresponding effective quantity of fuel (Qeff) to be injected in the cylinder; and to correct (31) by means of a second parameter allowing calibration (Glean), the controlled quantity of fuel (Qcl) relative to each cylinder of the second sub-assembly (Slean), to obtain a corresponding effective quantity of fuel (Qeff) to be injected in the cylinder; the following stage is also included:

  f) filtering (19) the signal (Vout) representative of the stoichiometric composition of exhaust gases before comparing the said measured parameter ($\lambda$m) with the said objective parameter ($\lambda$o); the said phase f) allowing the elimination of eventual high frequency components from the said signal (Vout) representative of the stoichiometric composition.

11. Method according to any claim from 1 to 10, wherein the recording (100) of values assumed by a plurality of information signals (P) correlates with an operative state of the engine (2), and the generation of an enabling signal (A) of the implementation of all of the said stages whenever the said recorded values satisfy a predetermined relation with respective reference values.

12. Method according to claim 11, wherein the said plurality of information signals (P) comprises a first signal T1 representative of the air temperature, a second signal T2 representative of the temperature of the engine cooling liquid (2), and a third signal temp representative of the time lag in relation to the engine start-up; the said enabling signal (A) being generated whenever there are results such as:

$$T1ref1 < T1 < T1ref2$$

$$T2ref1 < T2 < T2ref2$$

$$tref1 < temp < tref2$$

where T1ref1, T1ref2, T2ref1 T2ref2, tref1 tref2 represent the said reference values.

## Patentansprüche

1. Verfahren zum Steuern des Einspritzens und Zündens des Luft/Kraftstoff-Gemisches in einem Verbrennungsmotor (2), um die Erwärmung eines längs des Auslaßkanals (5) des Motors (2) angeordneten Katalysators (6) zu beschleunigen, wobei der Motor (2) eine gegebene Anzahl (N) von Zylindern, eine Einspritzanordnung (3) zum Zuführen von Kraftstoff zu den Zylindern und eine Zündanordnung (8) zum Steuern des Beginns der Verbrennung der Zylinder umfaßt; wobei das Verfahren die folgenden Stufen umfaßt:

   a) einer ersten Unterbaugruppe (Sfett) einer gegebenen Anzahl (N) von Zylindern wird ein fettes Gemisch zugeführt, bei dem das Luft/Kraftstoff-Verhältnis im Vergleich zu einem stöchiometrischen Luft/Kraftstoff-Gemisch einen niedrigen Wert annimmt; und

   b) einer zweiten Unterbaugruppe (Smager) einer gegebenen Anzahl (N) von Zylindern wird ein mageres Gemisch zugeführt, bei dem das Luft/Kraftstoff-Verhältnis im Vergleich zu einem stöchiometrischen Luft/Kraftstoff-Gemisch einen hohen Wert annimmt, und zwar so, daß das Luft/Kraftstoff-Verhältnis des gesamten dem Motor (2) zugeführten Gemisches im wesentlichen stöchiometrisch ist; wobei das Verfahren **dadurch gekennzeichnet ist, daß** es die folgende Stufe c) umfaßt: der effektive Moment der Verbrennungsexplosion (teff) im Verhältnis zu einem nominalen Moment der Explosion (t) wird zumindest in einem Teil der mit dem fetten Gemisch versorgten Zylinder so verzögert, daß es längs des Auslaßkanals (5) zu einer restlichen Verbrennung kommt, die die Erwärmung des Katalysators (6) beschleunigt; wobei die erste und die zweite Unterbaugruppe (Sfett) einen Kardinalwert gleich eins haben.

2. Verfahren nach Anspruch 1, das feiner die folgende Stufe umfaßt:

   d) der effektive Moment der Verbrennungsexplosion (teff) des Gemisches im Verhältnis zum nominalen Moment der Explosion (t) wird zumindest in einem Teil der mit magerem Gemisch versorgten Zylinder antizipiert, um die restliche Verbrennung zu begünstigen.

**3.** Verfahren nach Anspruch 1 oder 2, bei dem Stufe c) eine Stufe ist, bei der in jedem der mit fettem Gemisch versorgten Zylinder das effektive Moment der Explosion (teff) im Vergleich zum nominalen Moment der Explosion (t) verzögert ist.

**4.** Verfahren nach Anspruch 3, bei dem Stufe d) eine Stufe ist, bei der in jedem der mit magerem Gemisch versorgten Zylinder der effektive Moment der Explosion (teff) im Vergleich zum nominalen Moment der Explosion (t) antizipiert wird.

**5.** Verfahren nach Anspruch 4, bei dem die erste und die zweite Unterbaugruppe (Sfett, Smager) im Verhältnis zu der spezifischen Anzahl (N) von Zylindern zueinander komplementär sind.

**6.** Verfahren nach einem der Ansprüche 1 bis 4, das die folgende Stufe umfaßt:

e) die Zusammensetzung der ersten und der zweiten Unterbaugruppe (Sfett, Smager) wird nach einer voreingestellten Rotationsprozedur fiir die Zylinder zyklisch aktualisiert.

**7.** Verfahren nach Anspruch 6, bei dem die voreingestellte Prozedur verlangt, daß bei einer Anzahl von Takten des Motors (2) gleich der gegebenen Anzahl (N) von Zylindern jeder Zylinder ausschließlich in einem Takt mit einem fetten Gemisch versorgt wird und in den verbleibenden Takten mit magerem Gemisch versorgt wird.

**8.** Verfahren nach einem der Ansprüche 1 bis 7, bei dem Stufe c) die folgenden Unterstufen umfaßt:

c1) der nominale Moment der Explosion (t) der Verbrennung in den Zylindern der ersten Unterbaugruppe (Sfett) wird anhand einer Vielzahl von Informationssignalen (P) für eine Betriebsstufe der Befeuerung des Motors (2) berechnet (32);

c2) auf den nominalen Moment der Explosion (t) wird eine Verzögerung (tfett) angewandt (33), die eine Kalibrierung erlaubt, um den effektiven Explosionsmoment (teff) zu erhalten;

c3) der Zündanordnung (8) wird befohlen, die Verbrennung in den Zylindern der ersten Unterbaugruppe (Sfett) im Moment der effektiven Explosion (teff) in Gang zu setzen.

**9.** Verfahren nach Anspruch 2, bei dem Stufe d) die folgenden Unterstufen umfaßt:

d1) der nominale Moment der Explosion (t) der Verbrennung in den Zylindern der zweiten Unterbaugruppe (Smager) wird anhand einer Vielzahl von Informationssignalen (P) für eine Betriebsstufe der Befeuerung des Motors (2) berechnet (32);

d2) auf den nominalen Moment der Explosion (t) wird eine Verzögerung (tmager) angewandt (33), die eine Kalibrierung erlaubt, um den effektiven Explosionsmoment (teff) zu erhalten; und

d3) der Zündanordnung (8) wird befohlen, die Verbrennung in den Zylindern der zweiten Unterbaugruppe (Smager) genau im Moment der effektiven Explosion (teff) in Gang zu setzen.

**10.** Verfahren nach einem der Ansprüche 1 bis 9, bei dem die Stufen a) und b) die folgenden weiteren Unterstufen umfassen:

- Registrieren eines Signals (Vaus) fiir die stöchiometrische Zusammensetzung der Abgase mittels Sauerstoffsensoreinrichtungen (9), die längs des Auslaßkanals (5) stromaufwärts von dem Katalysator (6) angeordnet sind;

- Umwandeln (10) des Signals (Vaus) für die stöchiometrische Zusammensetzung in einen gemessenen Parameter (λm) für das Luft/ Kraftstoff-Verhältnis des dem Motor (2) zugeführten Gemisches;

- Berechnen (24) eines objektiven Parameters (λo) für das erforderliche Luft/Kraftstoff-Verhältnis anhand einer Vielzahl von Informationssignalen (P) für eine Betriebsstufe der Befeuerung des Motors (2);

- Vergleichen (23) des gemessenen Parameters (λm) mit dem objektiven Parameter (λo) zur Berechnung eines Fehlerparameters (Δλ);

- für jeden Zylinder wird anhand einer Vielzahl von Informationssignalen (P) eine jeweilige theoretische Kraftstoffinenge (Qt) berechnet (30), die dem Zylinder mit Hilfe der Einspritzanordnung (3) für den Motor (2) wahrscheinlich zugeführt werden wird;

- der Fehlerparameter (Δλ) wird verarbeitet (27), um einen Korrekturparameter (KO2) zu berechnen, der auf die jeweilige theoretische Kraftstoffmenge (Qt) angewandt werden soll (29), um die jeweilige geregelte Kraftstoffmenge (Qc1) zu erhalten;

- mit Hilfe eines ersten Parameters (Gfett), der die Kalibrierung erlaubt, wird die gesteuerte Kraftstoffmenge (Qc1) für jeden Zylinder der ersten Unterbaugruppe (Sfett) korrigiert (31), um eine entsprechende effektive Kraftstoffmenge (Qeff) zu erhalten, die in den Zylinder eingespritzt werden soll; und mit Hilfe eines zweiten Parameters (Gmager), der die Kalibrierung erlaubt, wird die gesteuerte Kraftstoffmange (Qc1) für jeden Zylinder der zweiten Unterbaugruppe (Smager) korrigiert (31), um eine entsprechende effektive Kraftstoffmenge (Qeff) zu erhalten, die in den Zylinder eingespritzt werden soll;

wobei außerdem die folgende Stufe vorgesehen ist:

f) Filtern (19) des Signals (Vaus) für die stöchiometrische Zusammensetzung der Abgase vor dem Vergleich des gemessenen Parameters (λm) mit dem objektiven Parameter (λo); wobei in Phase f) möglicherweise vorhandene hochfrequente Komponenten aus dem Signal (Vaus) für die stöchiometrische Zusammensetzung eliminiert werden können.

11. Verfahren nach einem der Ansprüche 1 bis 10, bei dem das Registrieren (100) der von einer Vielzahl von Informationssignalen (P) angenommenen Werte mit einem Betriebszustand des Motors (2) korreliert, und es wird ein Freigabesignal (A) für die Implementierung aller Stufen erzeugt, wenn die registrierten Werte einem vorbestimmten Verhältnis mit jeweiligen Referenzwerten genügen.

12. Verfahren nach Anspruch 11, bei dem die Vielzahl von Informationssignalen (P) ein erstes Signal T1 für die Lufttemperatur, ein zweites Signal T2 fiir die Temperatur der Kühlflüssigkeit des Motors (2) und ein drittes Signal temp für den Zeitverzug gegenüber dem Anfahren des Motors umfaßt; wobei das Freigabesignal (A) immer dann erzeugt wird, wenn es Ergebnisse gibt wie zum Beispiel:

$$T1ref1 < T1 < T1ref2$$

$$T2ref1 < T2 < T2ref2$$

$$tref1 < temp < tref2$$

wobei T1ref1, T1ref2, T2ref1, T2ref2, tref1, tref2 die Referenzwerte darstellen.

**Revendications**

1. Procédé de commande de l'injection et de l'allumage du mélange air-carburant dans un moteur (2) à combustion interne, pour accélérer le réchauffage d'un convertisseur catalytique (6) implanté le long du conduit d'échappement (5) du moteur (2), ledit moteur (2) comprenant un nombre donné (N) de cylindres, un dispositif d'injection (3) pour délivrer du carburant auxdits cylindres, et un dispositif d'allumage (8) pour commander l'amorçage de la combustion desdits cylindres ; le procédé comprenant les étapes ci-après, consistant à:

a) délivrer, à un premier sous-ensemble (Srich) d'un nombre donné (N) de cylindres, un mélange riche dans lequel le mélange air-carburant présente une faible valeur comparativement à un mélange air-carburant stoechiométrique ; et
b) délivrer, à un second sous-ensemble (Slean) d'un nombre donné (N) de cylindres, un mélange pauvre dans lequel le mélange air-carburant présente une valeur élevée comparativement à un mélange air-carburant stoechiométrique, et de telle sorte que le mélange air-carburant du mélange total délivré au moteur (2) soit sensiblement stoechiométrique ;
le procédé étant **caractérisé par le fait qu'**il comprend l'étape suivante :
c) retarder l'instant effectif de l'explosion de combustion (teff) par rapport à un instant nominal d'explosion (t), dans au moins une partie des cylindres alimentés par le mélange riche, de façon telle qu'une combustion résiduelle s'opère le long du conduit d'échappe-ment (5), et accélère le réchauffage dudit convertisseur catalytique (6) ; lesdits premier et second sous-ensembles (Srich) étant d'un type cardinal égal à un.

2. Procédé selon la revendication 1, comprenant en outre l'étape suivante :

d) anticipation de l'instant effectif de l'explosion de combustion (teff) du mélange par rapport à l'instant nominal d'explosion (t), dans au moins une partie des cylindres alimentés en mélange pauvre, pour promouvoir ladite combustion résiduelle.

3. Procédé selon la revendication 1 ou 2, dans lequel ladite étape c) est une étape durant laquelle l'instant effectif de l'explosion (teff) est retardé, comparativement à l'instant nominal d'explosion (t), dans chacun des cylindres alimentés en mélange riche.

4. Procédé selon la revendication 3, dans lequel ladite étape d) est une étape durant laquelle l'instant effectif de l'explosion (teff) est anticipé, comparativement à l'instant nominal d'explosion (t), dans chacun des cylindres alimentés en mélange pauvre.

**5.** Procédé selon la revendication 4, dans lequel lesdits premier et second sous-ensembles (Srich, Slean) sont complémentaires l'un de l'autre par rapport audit nombre spécifique (N) de cylindres.

**6.** Procédé selon l'une quelconque des revendications 1 à 4, comprenant l'étape suivante :

e) actualisation cyclique de la composition desdits premier et second sous-ensembles (Srich, Slean) en conformité avec un processus de rotation préréglé destiné aux cylindres.

**7.** Procédé selon la revendication 6, dans lequel ledit processus préréglé exige que, dans un nombre de cycles du moteur (2) égal au nombre donné (N) de cylindres, chacun desdits cylindres soit alimenté par un mélange riche exclusivement au cours de l'un des cycles, et soit alimenté en mélange pauvre au cours des cycles restants.

**8.** Procédé selon l'une quelconque des revendications 1 à 7, dans lequel ladite étape c) comprend les sous-étapes suivantes :

c1) calcul (32) dudit instant nominal d'explosion (t) de la combustion, dans les cylindres du premier soue-ensemble (Srich), sur la base d'une pluralité de signaux d'information (P) représentatifs d'une étape opératoire de fonctionnement du moteur (2) ;
c2) application (33), audit instant nominal d'explo-sion (t), d'une temporisation (Trick) autorisant un étalonnage pour obtenir ledit instant effectif de l'explosion (teff) ;
c3) pilotage dudit dispositif d'allumage (8) pour amorcer une combustion, dans les cylindres du premier soue-ensemble (Srich), audit instant d'explosion effective (teff).

**9.** Procédé selon la revendication 2, dans lequel ladite étape d) comprend les sous-étapes suivantes :

d1) calcul (32) dudit instant nominal d'explosion (t) de la combustion, dans les cylindres du second sous-ensemble (Slean), sur la base d'une pluralité de signaux d'informa-tion (P) représentatifs d'une étape opératoire de fonctionnement du moteur (2) ;
d2) application (33), audit Instant nominal d'explo-sion (t), d'une temporisation (Tlean) autorisant un étalonnage pour obtenir ledit instant effectif de l'explosion (teff) ; et
d3) pilotage dudit dispositif d'allumage (8) pour amorcer une combustion, dans les cylindres du second soue-ensemble (Slean), précisément audit instant d'explosion effective (teff).

**10.** Procédé selon l'une quelconque des revendications 1 à 9, dans lequel lesdites étapes a) et b) comprennent les sous-étapes supplémentaires ci-après, consistant à :

- enregistrer un signal (Vaut) représentatif de la composition stoechiométrique des gaz d'échappement, à l'sida de moyens (9) capteurs d'oxygène implantés le long du conduit d'échappement (5), en amont dudit convertisseur catalytique (6) ;
- convertir (10) ledit signal (Vout), représentatif de la composition stoechiométrique, en un paramètre mesuré ($\lambda$m) représentatif du rapport air-carburant du mélange délivré au moteur (2) ;
- calculer (24) un paramètre objectif ($\lambda$o) représentatif du rapport air-carburant requis, sur la base d'une pluralité de signaux d'information (P) représentatifs d'une étape opératoire de fonctionnement du moteur (2) ;
- comparer (23) le paramètre mesuré ($\lambda$m) au paramètre objectif ($\lambda$o), en calculant un paramètre d'erreur ($\Delta\lambda$);
- calculer (30) pour chaque cylindre, sur la base d'une pluralité de signaux d'information (P), une quantité théorique respective de carburant (Qt) susceptible d'être délivrée au cylindre du moteur (2), au moyen dudit dispositif d'injection (3) ;
- traiter (27) ledit paramètre d'erreur ($\Delta\lambda$), afin de calculer un paramètre de collection (KO2) destiné à une application (29) à chaque quantité théorique de carburant (Qt) précitée, en vue d'obtenir une quantité respective de carburant (Qcl) commandée en boucle fermée ;
- corriger (31), au moyen d'un premier paramètre autorisant un étalonnage (Grich), la quantité commandée de carburant (Qcl) se rapportant à chaque cylindre du premier sous-ensemble (Srich), en vue d'obtenir une quantité effective correspondante de carburant (Qeff) devant être injectée dans le cylindre ; et corriger (31), au moyen d'un second paramètre autorisant un étalonnage (Glean), la quantité commandée de carburant (Qcl) se rapportant à chaque cylindre du second sous-ensemble (Slean), en vue d'obtenir une quantité effective correspondante de carburant (Qeff) devant être injectée dans le cylindre, le procédé englobant également l'étape suivante :

f) filtrage (19) du signal (Vout) représentatif de la composition stoechiométrique des gaz d'échappement, avant de comparer ledit paramètre mesuré ($\lambda$m) audit paramètre objectif ($\lambda$o); ladite phase f) permettant l'élimination de composants définitifs de haute fréquence d'avec ledit signal (Vout) représentatif de la composition stoechiométrique.

11. Procédé selon l'une quelconque des revendications 1 à 10, dans lequel l'enregistrement (100) de valeurs présentées par une pluralité de signaux d'information (P) est en corrélation avec un état de fonctionnement du moteur (2) ; et avec la génération d'un signal de validation (A) de l'exécution de toutes les étapes précitées, toutes les fois que lesdites valeurs enregistrées satisfont à une relation prédéterminée avec des valeurs respectives de référence.

12. Procédé selon la revendication 11, dans lequel ladite pluralité de signaux d'information (P) comprend un premier signal T1 représentatif de la température de l'air, un deuxième signal T2 représentatif de la température du liquide de refroidissement du moteur (2), et un troisième signal temp représentatif d'un décalage temporel par rapport au démarrage dudit moteur ; ledit signal de validation (A) étant engendré toutes les fois que se présentent des résultats tels que:

$$T1ref1 < T1 < T1ref2$$

$$T2ref1 < T2 < T2ref2$$

$$tref1 < temp < tref2,$$

dans lesquels T1ref1, T1ref2, T2ref1, T2ref2, tref1, tref2 représentent lesdites valeurs de référence.

ENGINE

IGNITION ARRANGEMENT

INJECTION ARRANGEMENT

$teff_1$   $teff_N$   $Qeff$   $Qeff_N$

$Vout$

$\lambda_m = \dfrac{(A/F)_{HIS}}{(A/F)_{stec}}$

$Vout$

A/D

$\lambda_m$

$teff_1$   $teff_N$

Trich
Tlean
A

$t_1$   $t_N$

F

rpm   load

A

$\lambda_0$

$+$   $-$

$\Delta\lambda = \lambda_0 - \lambda_m$

$\lambda_m$

A

P-I

$K_{O2}$

$Qt_1$   $Qcl_1$

$Qt_N$   $Qcl_N$

A   Grich   Glean

$Qeff_1$

$Qeff_N$

Fig.1

START

100

T1 record
T2 record
temp record

110

130

T1ref1 < T1 < T1ref2
( & )
T2ref1 < T2 < T2ref2
( & )
Tref1 < temp < tref2

no

YES

120

Fig.2

START

200

Defines Srich & Slean sub-assemblies
Srich: = {i-$_{ordinal}$ cylinder}
Slean: = {1st, 2nd(i-1)-$_{ordinal}$, ...N-$_{ordinal}$ cylinder

201

calculate $Qt_1$ ....... $Qt_N$
calculate $t_1$ ......... $t_N$

202

calculate $\Xi = \lambda_0 - \lambda m$
calculate $K_{O2}$
calculate $Qcl_1$ ..... $Qcl_N$

203

calculate $Qeff_i = Qcli(1+Grich)$   $\forall$ cylinder $i \in Srich$
calculate $Qeff_j = Qclj(1+Glean)$   $\forall$ cylinder $j \in Slean$
calculate $eff_1$ ..... $Qeff_N$

204

calculate $teffi = t_i + Trich$   $\forall$ cylinder $i \in Srich$
calculate $teffj = t_j + Tlean$   $\forall$ cylinder $j \in Slean$

205

update   Srich e Slean

206

yes   applicability
conditions check OK?   no

120

130

Fig.3

# Fig.4

# Fig.5